(19) Europäisches Patentamt / European Patent Office / Office européen des brevets

(11) **EP 1 792 922 A1**

(12) **EUROPÄISCHE PATENTANMELDUNG**

(43) Veröffentlichungstag:
06.06.2007   Patentblatt 2007/23

(51) Int Cl.:
*C08F 218/04* (2006.01)          *C08L 31/04* (2006.01)
*C04B 24/26* (2006.01)

(21) Anmeldenummer: 06123809.3

(22) Anmeldetag: **10.11.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **17.11.2005   DE 102005054905**

(71) Anmelder: **Wacker Polymer Systems GmbH & Co. KG**
**84489 Burghausen (DE)**

(72) Erfinder:
• **Weitzel, Hans-Peter, Dr.**
 **84571, Reischach (DE)**
• **Bauer, Werner, Dr.**
 **84508, Burgkirchen (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(54) **Schutzkolloidstabilisiertes Dispersionspulver**

(57)    Gegenstand der Erfindung sind Schutzkolloid-stabilisierte Dispersionspulver, welche dadurch gekennzeichnet sind, dass das Schutzkolloid
a) mindestens einen Polyvinylalkohol mit einer Viskosität $\mu_1$ nach Höppler von höchstens 3 mPas und
b) mindestens einen Polyvinylalkohol mit einer Viskosität $\mu_2$ nach Höppler von 4 mPas bis 25 mPas enthält
und die gewichtete Viskosität $\mu_w$ des Schutzkolloids nach Höppler höchstens 6 mPas beträgt.

EP 1 792 922 A1

**Beschreibung**

Die Erfindung betrifft in Wasser redispergierbare, schutzkolloidstabilisierte Dispersionspulver, enthaltend Polyvinylalkohol mit einer Höpplerviskosität von höchstens 3 mPas, Ihre Herstellung und ihre Verwendung in hydraulisch abbindenden Systemen.

Polymerisate auf Basis von Vinylester, Vinylchlorid, (Meth)-acrylatmonomeren, Styrol, Butadien und Ethylen werden vor allem in Form deren wässriger Dispersionen oder in Wasser redispergierbarer Polymerpulver in vielerlei Anwendungen, beispielsweise als Beschichtungsmittel oder Klebemittel für die unterschiedlichsten Substrate eingesetzt. Zur Stabilisierung dieser Polymerisate werden Schutzkolloide oder seltener niedermolekulare oberflächenaktive Verbindungen eingesetzt. Als Schutzkolloide werden in der Regel Polyvinylalkohole eingesetzt.

Polyvinylalkohol hat als Schutzkolloid viele Vorteile, insbesondere verleiht er dem Pulver die Stabilität gegenüber einer vorzeitigen Koaleszenz der Partikel und wirkt selbst als Bindemittel. Andererseits aber wirkt sich der Polyvinylalkohol gelegentlich auch etwas nachteilig aus, wenn große Mengen an Dispersionspulver eingesetzt werden beispielsweise bei Dichtungsschlämmen. In diesem Fall wirkt sich die newtonsche Rheologie des Polyvinylalkoholes als Nachteil in der Verarbeitung bei diesen Massen aus.

Die nach dem Stand der Technik verwendeten Polyvinylalkohole weisen im Allgemeinen eine Viskosität nach Höppler (gemäß DIN 53015: 1978-09) von mindestens 3 mPas, häufig bevorzugt sogar von mindestens 4 mPas auf und werden beispielsweise in den Patentschriften DE 10162513 A1 und EP 1 262 465 B1 beschrieben. Nach oben gibt es für die Viskosität nach Höppler keine Beschränkung. Auf Grund der steigenden Viskosität werden jedoch selten Werte über 30 mPas angetroffen.

Der Bereich einer Viskosität nach Höppler unterhalb von 3 mPas wurde wenig bis gar nicht untersucht, da die bisherige Annahme war, dass solch niedermolekulare Verbindungen sich schlecht zur Stabilisierung von Dispersionspulvern eignen.

Die Herstellung der Dispersionspulver erfolgt beispielsweise durch Sprühtrocknung, wie in der Patenschrift EP 1 262 465 B1 beschrieben, oder durch Gefriertrocknung von wässrigen Latices.

Diese Produkte finden insbesondere Verwendung als Bindemittel in hydraulisch abbindenden Klebstoffen wie beispielsweise in Fliesenklebern auf Basis von Zementen oder Gips.

Es bestand daher die Aufgabe, ein Dispersionspulver zu entwickeln, dass auch in großen Einsatzmengen gute Verarbeitung zeigt.

Diese Aufgabe wurde durch die erfindungsgemäßen Dispersionspulver gelöst, welche zur Stabilisierung eine Mischung aus niedrig- und höherviskosen Polyvinylalkoholen enthalten.

Gegenstand der Erfindung sind schutzkolloidstabilisierte Dispersionspulver, welche dadurch gekennzeichnet sind, dass das Schutzkolloid

a) mindestens einen Polyvinylalkohol mit einer Viskosität $\mu_1$ nach Höppler von höchstens 3 mPas und
b) mindestens einen Polyvinylalkohol mit einer Viskosität $\mu_2$ nach Höppler von 4 mPas bis 25 mPas enthält

und die gewichtete Viskosität $\mu_W$ des Schutzkolloids nach Höppler höchstens 6 mPas beträgt.

Überraschenderweise werden erfindungsgemäße Dispersionspulver erhalten, die trotz des hohen Anteiles an extrem niedermolekularen Polyvinylalkoholen blockstabile Pulver ergeben.

Überraschenderweise wurde auch gefunden, dass der niedermolekulare Polyvinylalkohol sich nicht nur positiv auf die Verarbeitung auswirkt sondern auch dazu führt, dass die Haftung beispielsweise auf Polystyrol verbessert wird.

Die erfindungsgemäßen Pulver enthalten 0,1 bis 10,0 Gew.-% eines Polyvinylalkoholes a) mit einer Viskosität nach Höppler von höchstens 3 mPas. Bevorzugt werden 1,0 bis 5,0 Gew.-% dieses Polyvinylalkoholes a) eingesetzt. Bevorzugt liegt die Viskosität $\mu_1$ nach Höppler im Bereich von 1,5 mPas bis 2,5 mPas.

Dieser spezielle Polyvinylalkohol aus a) und b) wird bevorzugt der Dispersion vor der Trocknung zum Pulver zugesetzt, er kann aber auch schon bei der Polymerisation der Ausgangsdispersion zugegeben werden.

Der niedermolekulare Polyvinylalkohol a) wird in Kombination mit üblichem höhermolekularem Polyvinylalkohol b) eingesetzt. Jedoch sollte der hochmolekulare Anteil nicht zu groß gewählt werden, weil sonst die positiven Effekte teilweise verloren gehen. Bevorzugt wird 10 bis 50 Gew.-% höhermolekularer Polyvinylalkohol b) bezogen auf die Gesamtmenge Polyvinylalkohol eingesetzt. Besonders bevorzugt 15 bis 35 Gew.-% b).

Zur Bewahrung des positiven Effektes müssen die folgenden Voraussetzungen erfüllt sein. Als Schutzkolloid wird eine Kombination mindestens eines Polyvinylalkoholes a) mit einer Viskosität $\mu_1$ nach Höppler von höchstens 3 mPas und mindestens einem Polyvinylalkohol b) mit einer Viskosität $\mu_2$ nach Höppler von 4 mPas bis 25 mPas eingesetzt. Dabei werden die Mengenverhältnisse von a) zu b) so gewählt, dass die gewichtete Viskosität $\mu_W$ nach Höppler höchstens 6 mPas beträgt.

$\mu_W$ lässt sich durch die allgemeine Gleichung (1) beschreiben

$$\mu_w \;=\; \mu_1 * x_1 \;+\; \mu_2 * x_2 \;+\; \ldots\ldots\ldots \quad \mu_i * x_i \tag{1}$$

wobei

$i$ = die Zahl der eingesetzten Polyvinylalkohole a) und b), also mindestens 2 bedeutet,

$x_i$ = der Massebruch des jeweiligen Polyvinylalkoholes $i$ mit der Viskosität $\mu_i$ nach Höppler ist und sich durch die allgemeine Gleichung (2) beschreiben lässt

$$x_i \;=\; w_i / (w_1 + w_2 + \ldots w_i) \tag{2},$$

wobei

$w$ = die jeweilige Masse des Polyvinylalkohols bedeutet und

$i$ = die vorstehende Bedeutung trägt.

Die weiteren Bestandteile des erfindungsgemäßen schutzkolloidstabilisierten Dispersionspulvers entsprechen dem Stand der Technik.

Für das Basispolymerisat geeignete Vinylester sind solche von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von $\alpha$-verzweigten Monocarbonsäuren mit 9 bis 13 C-Atomen, beispielsweise VeoVa9R oder VeoVa10R, Handelsnamen der Firma Resolution Europe BV, Hoogvliet, The Netherlands. Besonders bevorzugt ist Vinylacetat.

Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Gegebenenfalls können noch 0,05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Beispiele für geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 40 Gew.-% Ethylen, Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11, Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat, und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten, Mischpolymerisate mit Vinylacetat, 1 bis 40 Gew.-% Ethylen und 1 bis 60 Gew.-% Vinylchlorid, wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen sowie Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat, Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen, Styrol-1,3-Butadien-Copolymerisate, wobei die Polymerisate noch die genannten Hilfsmonomere in den genannten Mengen enthalten können, und sich die Angaben in Gew.-% auf jeweils 100 Gew.-% aufaddieren.

Die Monomerauswahl beziehungsweise die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: $1/Tg = x1/Tg1 + x2/Tg2 + ... + xn/Tgn$, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Homo- und Mischpolymerisate erfolgt nach dem Emulsionspolymerisationsverfahren, wobei die Startpolymerisationstemperatur im allgemeinen aber nicht notwendigerweise höchstens 100°C beträgt, und die Polymerisation zu mindestens 60%, bevorzugt zu mehr als 70%, besonders bevorzugt zu mehr als 80% ihres Gesamtumsatzes bei 100°C bis 140°C geführt wird.

Die Initiierung der Polymerisation erfolgt mit den für die Emulsionspolymerisation gebräuchlichen wasserlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Die genannten Initiatoren werden im Allgemeinen in einer Menge von 0,001 bis 0,02 Gew.-%, vorzugsweise 0,001 bis 0,01 Gew.-%, jeweils bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0,001 bis 0,03 Gew.-%, vorzugsweise 0,001 bis 0,015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomere, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Zur Stabilisierung des Polymerisationsansatzes kann die erfindungsgemäße Mischung aus Polyvinylalkoholen a) und b) zugesetzt werden. Es kann aber auch in Gegenwart von anderen Schutzkolloiden polymerisiert werden.

Geeignete andere Schutzkolloide für den Polymerisationsansatz sind Polyvinylalkohole; Polyvinylacetale; olyvinylpyrrolidone; Polysaccharide in wasserlöslicher Form wie Stärken beispielsweise, Amylose und Amylopectin, Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly-(meth)acrylsäure, Copolymerisate von (Meth) acrylaten mit carboxylfunktionellen Comonomereinheiten, Poly(meth)acrylamid, Polyvinylsulfonsäuren und deren wasserlösliche Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0,1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4%-iger wässriger Lösung von 3 bis 15 mPas (Methode nach Höppler bei 20°C. Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Wird in Gegenwart von Emulgatoren polymerisiert, beträgt deren Menge 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylaryl-lethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten. Vorzugsweise wird auf die Anwesenheit von Emulgatoren verzichtet.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen haben einen Feststoffgehalt von 30 bis 75 Gew.-%, vorzugsweise von 50 bis 60 Gew.-%.

Falls die Polymersiation unter Anwesenheit von anderen Schutzkolloiden durchgeführt wurde, erfolgt die Zugabe der erfindungsgemäßen Mischung aus Polyvinylalkohol a) und b) vor der Trocknung.

Zur Herstellung der in Wasser redispergierbaren Polymerpulver werden die wässrigen Dispersionen, gegebenenfalls nach Zusatz von Schutzkolloiden als Trocknungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe, ebenfalls ein Schutzkolloid, in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll 3 bis 30 Gew.-%, bezogen auf den Polymeranteil betragen; bevorzugt werden 5 bis 20 Gew.-%, bezogen auf den Polymeranteil eingesetzt.

Falls die Polymerisation mit der erfindungsgemäßen Polyvinylalkoholmischung aus a) und b) durchgeführt wurde, können gegebenenfalls andere Schutzkolloide als Trocknungshilfe eingesetzt werden.

Geeignete andere Trocknungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Trocknungshilfe eingesetzt, wobei die als Schutzkolloide bevorzugten Polyvinylalkohole auch bevorzugt als Trocknungshilfe eingesetzt werden.

Bei der Verdüsung hat sich vielfach ein Gehalt von höchstens 1,5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel, auch als Antibackmittel bezeichnet, vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 μm.

Die Viskosität der zu verdüsenden Speise wird über den Feststoffgehalt so eingestellt, dass ein Wert von höchstens 500 mPas (Brookfield-Viskosität bei 20 Umdrehungen und 23°C), bevorzugt höchstens 250 mPas, erhalten wird. Der Feststoffgehalt der zu verdüsenden Dispersion beträgt mindestens 35 %, bevorzugt mindestens 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Das Verfahren zur Herstellung der erfindungsgemäßen Dispersionspulver erfolgt mittels radikalischer Polymerisation im wässrigen Medium und anschließender Trocknung der damit erhaltenen Dispersion, und ist dadurch gekennzeichnet, dass während der Polymerisation und/oder vor der Trocknung der wässrigen Dispersion das erfindungsgemäße Schutzkolloid zugegeben wird.

Die erfindungsgemäßen in Wasser redispergierbaren schutzkolloidstabilisierten Dispersionspulver können in den dafür typischen Anwendungsbereichen eingesetzt werden. Beispielsweise in bauchemischen Produkten, gegebenenfalls in Verbindung mit hydraulisch abbindenden Bindemitteln wie Zementen, beispielsweise Portland-, Aluminat-, Trass-, Hütten- , Magnesia-, Phosphatzement, sowie Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Bevorzugte Anwendungsgebiete sind Spritzmörtel und Spritzbeton für Bauwerke des Hoch- und Tiefbaues sowie der Auskleidung von Tunnelwänden.

**Beispiele**

Als Ausgangsdispersion diente eine mit 6 Gew.-% Polyvinylalkoholes mit einem Verseifungsgrad von 88 Mol-% und einer Viskosität nach Höppler von 4 mPas hergestellte Vinylacetat-ethylencopolymerdispersion mit einer Tg von -7°C.

Pulver

Die Pulver wurden nach Zugabe von Polyvinylalkohol hergestellt.
Die Dispersion wurde dann mittels Zweistoffdüse versprüht. Als Verdüsungskomponente diente auf 4 bar vorgepresste Luft, die gebildeten Tropfen wurden mit auf 125°C erhitzter Luft im Gleichstrom getrocknet. Das erhaltene trockene Pulver wurde mit 10 Gew.-% handelsüblichem Antiblockmittel Calcium-Magnesium-Carbonat versetzt.

Pulver P1 (erfindungsgemäß)

Die Ausgangsdispersion wurde mit 2 Gew.-% eines Polyvinylalkoholes mit einem Verseifungsgrad von 88 Mol-% und einer Viskosität nach Höppler von 2 mPas sowie 3 Gew% eines Polyvinylalkoholes mit einem Verseifungsgrad von 88 Mol-% und einer Viskosität nach Höppler von 13 mPas und 2 Gew.% eines Polyvinylalkoholes mit einem Verseifungsgrad von 88 Mol-% und einer Viskosität nach Höppler von 4 mPas versetzt.
Gew.% Anteil Polyvinylalkohol mit $\mu_1$ = 15,4%
$\mu_W$ = 5,8 mPas

Pulver P2 (erfindungsgemäß)

Die Ausgangsdispersion wurde mit 5 Gew.-% eines Polyvinylalkoholes mit einem Verseifungsgrad von 88 Mol-% und einer Viskosität nach Höppler von 2 mPas sowie 3 Gew% eines Polyvinylalkoholes mit einem Verseifungsgrad von 88 Mol-% und einer Viskosität nach Höppler von 13 mPas und 2 Gew.% eines Polyvinylalkoholes mit einem Verseifungsgrad von 88 Mol-% und einer Viskosität nach Höppler von 4 mPas versetzt.
Gew.% Anteil Polyvinylalkohol mit $\mu_1$ = 31,3%
$\mu_W$ = 5,1 mPas

Pulver V3 (nicht erfindungsgemäß)

Die Ausgangsdispersion wurde mit 12 Gew.-% eines Polyvinylalkoholes mit einem Verseifungsgrad von 88 Mol-% und einer Viskosität nach Höppler von 2 mPas sowie 3 Gew% eines Polyvinylalkoholes mit einem Verseifungsgrad von 88 Mol-% und einer Viskosität nach Höppler von 13 mPas und 2 Gew.% eines Polyvinylalkoholes mit einem Verseifungsgrad von 88 Mol-% und einer Viskosität nach Höppler von 4 mPas versetzt.
Gew.% Anteil Polyvinylalkohol mit $\mu_1$ = 52,2%
$\mu_W$ = 4,1 mPas

Pulver V4 (nicht erfindungsgemäß)

Die Ausgangsdispersion wurde mit 2 Gew.-% eines Polyvinylalkoholes mit einem Verseifungsgrad von 88 Mol-% und einer Viskosität nach Höppler von 2 mPas sowie 5 Gew% eines Polyvinylalkoholes mit einem Verseifungsgrad von 88 Mol-% und einer Viskosität nach Höppler von 13 mPas und 2 Gew.% eines Polyvinylalkoholes mit einem Verseifungsgrad von 88 Mol-% und einer Viskosität nach Höppler von 4 mPas versetzt.
Gew.% Anteil Polyvinylalkohol mit $\mu_1$ = 13,3%
$\mu_W$ = 6,7 mPas

Ausprüfung:

Die erhaltenen Pulver wurden auf ihre Pulvereigenschaften, die Verarbeitung in einer Dichtschlämme und Haftung auf Styropor untersucht.

Bestimmung der Blockfestigkeit (BF):

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulvers bestimmt. Die Blockstabilität wurde wie folgt klassifiziert:

1-3 = sehr gute Blockstabilität
4-6 = gute Blockstabilität
7-8 = befriedigende Blockstabilität
9-10 = nicht blockstabil, Pulver nach Zerdrücken nicht mehr rieselfähig.

Bestimmung des Absitzverhaltens (RA):

Das Absitzverhalten der Redispersion dient als Maß für die Redispergierbarkeit der Pulvers. Die Redispersionen wurden 50 %-ig in Wasser durch Einwirkung von starken Scherkräften erzeugt.
Das Absitzverhalten wurde dann an verdünnten Redispersionen, mit 0,5% Festgehalt, bestimmt, und dazu 100 ml dieser Dispersion in eine graduierte Röhre gefüllt, und die Absitzhöhe an Feststoff gemessen. Die Angabe erfolgt in mm Absitz nach 24 Stunden. Werte größer 7 zeigen eine unzureichende Redispersion des Pulvers an.
Bestimmung der Haftzugfestigkeiten (HZ) auf Styropor eines mit den Redispersionspulvern modifizierten, zementären Klebers:
Die Haftzugfestigkeiten auf Styropor (in % Ausriss) wurden in folgender Rezeptur überprüft (3% Polymeranteil):

Quarzsand            665 Teile
Portlandzement        300 Teile
Cellulose          5 Teile
Redispersionspulver        30 Teile

Es wurden die Haftzugfestigkeiten nach folgender Lagerbedingung bestimmt:

7T/21N:        7 Tage trocken/21 Tage nass (Nasslagerung)

Die Bestimmung der Verarbeitung (VA) einer zementären Dichtschlämme erfolgt qualitativ an folgender Rezeptur:

Quarzsand            547 Teile
Portlandzement          150 Teile
Cellulose        3 Teile
Redispersionspulver          300 Teile

Die Ergebnisse der Prüfung der Blockfestigkeit, des Absitzverhaltens, der Haftzugfestigkeit und der Verarbeitung der Redispersionspulver sind in Tabelle 1 zusammengefasst.

Tabelle 1

| Beispiel | BF | RA | HZ | VA |
|----------|----|----|-----|----|
| P1* | 4 | 1,9 | 80 | leichtgängig |
| P2* | 5 | 2,3 | 85 | leichtgängig, geringerer Wasserbedarf |
| V3 | 9 | 6,5 | 15 | nicht verarbeitbar |

(fortgesetzt)

| Beispiel | BF | RA | HZ | VA |
|----------|----|----|----|----|
| V4 | 3 | 2,1 | 78 | zäh, schwergängig |
| * erfindungsgemäß | | | | |

Aus den Daten der Tabelle 1 ist zu erkennen, dass die Pulvereigenschaften bei den erfindungsgemäßen Produkten P1 und P2 nicht negativ beeinflusst werden und die anwendungsseitigen Daten verbessert werden.

**Patentansprüche**

1.  Schutzkolloidstabilisierte Dispersionspulver, **dadurch gekennzeichnet, dass** das Schutzkolloid

    a) mindestens einen Polyvinylalkohol mit einer Viskosität $\mu_1$ nach Höppler von höchstens 3 mPas und
    b) mindestens einen Polyvinylalkohol mit einer Viskosität $\mu_2$ nach Höppler von 4 mPas bis 25 mPas enthält

    und die gewichtete Viskosität $\mu_W$ des Schutzkolloids nach Höppler höchstens 6 mPas beträgt.

2.  Dispersionspulver gemäß Anspruch 1, **dadurch gekennzeichnet, dass** 10 bis 50 Gew.-% höhermolekularer Polyvinylalkohol b) bezogen auf die Gesamtmenge an Polyvinylalkohol eingesetzt wird.

3.  Dispersionspulver gemäß Anspruch 1 oder 2, **dadurch gekennzeichnet, dass** $\mu_1$ 1,5 mPas bis 2,5 mPas beträgt.

4.  Dispersionspulver gemäß einem der Ansprüche 1 bis 3, **dadurch gekennzeichnet, dass** das Dispersionspulver 0,1 bis 10,0 Gew.% des Polyvinylalkoholes a) enthält.

5.  Dispersionspulver gemäß einem der Ansprüche 1 bis 4, **dadurch gekennzeichnet, dass** das Dispersionspulver 1,0 bis 5,0 Gew.% des Polyvinylalkoholes a) enthält.

6.  Dispersionspulver gemäß einem der Ansprüche 1 bis 5, **dadurch gekennzeichnet, dass** es Polymerisate enthält, ausgewählt aus der Gruppe enthaltend Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

7.  Verfahren zur Herstellung der Dispersionspulver, gemäß einem der Ansprüche 1 bis 6, mittels radikalischer Polymerisation im wässrigen Medium und anschließender Trocknung der damit erhaltenen Dispersion, **dadurch gekennzeichnet, dass** während der Polymerisation und/oder vor der Trocknung der wässrigen Dispersion das Schutzkolloid zugegeben wird.

8.  Verwendung der Dispersionspulver gemäß einem der Ansprüche 1 bis 6 in bauchemischen Produkten, in Verbindung mit hydraulisch abbindenden Bindemitteln, Zementen, Gips und Wasserglas.

9.  Verwendung der Dispersionspulver gemäß einem der Ansprüche 1 bis 6 für die Herstellung von Baukleber, Fliesenkleber und Vollwärmeschutzkleber, Putzen, Spachtelmassen, Fußbodenspachtelmassen, Verlaufsmassen, Dichtschlämmen, Fugenmörtel und Farben.

10. Verwendung der Dispersionspulver gemäß einem der Ansprüche 1 bis 6 für Spritzmörtel und Spritzbeton, für Bauwerke des Hoch- und Tiefbaues sowie der Auskleidung von Tunnelwänden.

**Europäisches Patentamt**

**EUROPÄISCHER RECHERCHENBERICHT**

Nummer der Anmeldung

EP 06 12 3809

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 632 096 A1 (WACKER CHEMIE GMBH [DE]) 4. Januar 1995 (1995-01-04) <br> * Beispiele 2,7 * <br> * Seite 5, Zeile 35 * <br> * Seite 4, Spalten 49-51 * <br> ----- | 1-10 | INV. <br> C08F218/04 <br> C08L31/04 <br> C04B24/26 |
| X | EP 0 477 900 A2 (WACKER CHEMIE GMBH [DE]) 1. April 1992 (1992-04-01) <br> * Beispiel 1 * <br> ----- | 1-10 | |

RECHERCHIERTE SACHGEBIETE (IPC)

C08F
C04B

Der vorliegende Recherchenbericht wurde für alle Patentansprüche erstellt

| Recherchenort | Abschlußdatum der Recherche | Prüfer |
|---|---|---|
| Den Haag | 24. April 2007 | Friederich, Pierre |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**
EP 06 12 3809

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-04-2007

| Im Recherchenbericht angeführtes Patentdokument | | Datum der Veröffentlichung | Mitglied(er) der Patentfamilie | | Datum der Veröffentlichung |
|---|---|---|---|---|---|
| EP 0632096 | A1 | 04-01-1995 | AT | 131849 T | 15-01-1996 |
| | | | CA | 2126586 A1 | 25-12-1994 |
| | | | CN | 1103876 A | 21-06-1995 |
| | | | DE | 4321070 A1 | 05-01-1995 |
| | | | ES | 2081723 T3 | 01-03-1996 |
| | | | FI | 942979 A | 25-12-1994 |
| | | | JP | 2694422 B2 | 24-12-1997 |
| | | | JP | 7041632 A | 10-02-1995 |
| | | | US | 5567750 A | 22-10-1996 |
| EP 0477900 | A2 | 01-04-1992 | AT | 121762 T | 15-05-1995 |
| | | | CA | 2052173 A1 | 28-03-1992 |
| | | | DE | 4030638 A1 | 02-04-1992 |
| | | | ES | 2071880 T3 | 01-07-1995 |
| | | | FI | 914449 A | 28-03-1992 |
| | | | JP | 1935404 C | 26-05-1995 |
| | | | JP | 5132626 A | 28-05-1993 |
| | | | JP | 6062859 B | 17-08-1994 |
| | | | US | 5118751 A | 02-06-1992 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10162513 A1

- EP 1262465 B1

**In der Beschreibung aufgeführte Nicht-Patentliteratur**

- **FOX T. G.** *Bull. Am. Physics Soc.,* 1956, vol. 1 (3), 123

- Polymer Handbook. J. Wiley & Sons, 1975